Europäisches Patentamt

European Patent Office

Office européen des brevets

(11) Veröffentlichungsnummer: **0 474 147 A1**

# EUROPÄISCHE PATENTANMELDUNG

(21) Anmeldenummer: **91114700.7**

(22) Anmeldetag: **31.08.91**

(51) Int. Cl.$^5$: **H01H 9/02**, F16B 1/00, B23Q 1/28, F16K 37/00

(30) Priorität: **07.09.90 DE 4028429**

(43) Veröffentlichungstag der Anmeldung: **11.03.92 Patentblatt 92/11**

(84) Benannte Vertragsstaaten:
**CH DE DK ES FR IT LI NL SE**

(71) Anmelder: **bar-pneumatische Steuerungssysteme GmbH Auf der Hohl W-5461 Dattenberg(DE)**

(72) Erfinder: **Heise, Manfred, Dipl.-Ing. Auf der Hohl W-5461 Dattenberg(DE)**

(74) Vertreter: **Schwarz, Klaus-Jürgen, Dipl.-Ing. Gluckstrasse 7 W-5300 Bonn 1(DE)**

(54) **Vorrichtung zur Montage von Signalgeräten an Schwenkantrieben, insbesondere zum Betätigen von Rohrarmaturen.**

(57) Bei der Montage von Signalgeräten, wie Endschalter und dergleichen, an Schwenkantrieben zum Betätigen von Rohrarmaturen und für ähnliche Einrichtungen ergeben sich insofern Schwierigkeiten, als Signalgeräte der unterschiedlichsten Art und Größe eingesetzt werden, die üblicherweise mit Schraubbefestigungsbolzen an mit entsprechenden Bohrungen oder Gewindeöffnungen versehenen Montageplatten oder Montagebrücken in bestimmten Stellungen in Bezug auf Betätigungsglieder, wie Schaltarme, Schaltnocken oder Kurvenscheiben, die von der Drehachse des Schwenkantriebes zur Seite ragen, angebracht werden müssen. Diese und andere Schwierigkeiten werden dadurch beseitigt, daß eine für die unterschiedlichsten Arten und Größen von Signal- und Steuergeräten geeignete Montageeinheit (7) vorgesehen ist, die als Klemmbefestigungseinrichtung mit einem am Schwenkantrieb (1) befestigten Basisteil (8) und einem das Signalgerät (4) tragenden Verschiebeteil (9) derart ausgebildet ist, daß das Signalgerät (4) auf den Koordinaten "x" und "y" eines räumlichen Koordinatensystems, die von Verschiebebahnen am Basisteil (8) und am Verschiebeteil (9) gebildet sind, gegenüber der Koordinate "z", die mit der Drehachse (2) des Schwenkantriebes (1) zusammenfällt, in jeweils unterschiedlichen Stellungen am Basisteil (8) festklemmbar ist.

FIG.1

Die Erfindung betrifft eine Vorrichtung zur Montage von Signalgeräten an Schwenkantrieben, die insbesondere zum Betätigen von Rohrarmaturen und dergleichen bestimmt sind und eine den Schwenkantrieb durchsetzende Drehachse aufweisen, wobei das Signalgerät an dem Schwenkantrieb mittels einer Montageeinheit und Schraubverbindungen oder dergleichen derart befestigt ist, daß es von Betätigungsgliedern, wie Schaltarmen, Schaltnocken oder Kurvenscheiben, die von der Drehachse des Schwenkantriebes zur Seite ragen, betätigt werden kann.

Bei der Montage von Signalgeräten, wie Endschalter und dergleichen, an Schwenkantrieben zum Betätigen von Rohrarmaturen und für ähnliche Einrichtungen kommen je nach Anwendungsbereich Signalgeräte unterschiedlicher Fabrikate mit unterschiedlichen Befestigungen zum Einsatz. Die Signalgeräte werden an dem Schwenkantrieb üblicherweise entweder direkt angebaut oder an Montageplatten bzw. Montagebrücken befestigt, die am Schwenkantrieb entweder nur an einer Seite oder beiderseits der Drehachse des Schwenkantriebes angeordnet sind und mehrere Befestigungsöffnungen in bestimmten festgelegten Abständen für eine Befestigung der Signalgeräte aufweisen. Die Signalgeräte besitzen hierfür in der Regel zwei oder vier Durchstecköffnungen für Befestigungsschrauben. Hierbei kommt es vor, daß der Abstand der Befestigungsöffnungen an der Montageplatte oder Montagebrücke nicht mit dem Abstand der Befestigungsschrauben an den Signalgeräten übereinstimmt, so daß für die Befestigung bestimmter Signalgeräte an der Montageplatte oder Montagebrücke noch zusätzliche Öffnungen oder Befestigungsmöglichkeiten angebracht werden müssen. Dies ist auch dann erforderlich, wenn die Signalgeräte noch in Bezug auf an der Drehachse angebrachte Betätigungseinrichtungen, wie Schaltarme, Schaltnocken oder Kurvenscheiben, senkrecht zur Drehachse des Schwenkantriebes positioniert werden müssen.

Damit an diesen bekannten Montageeinrichtungen die jeweils benötigten Befestigungsbohrungen oder Gewindeöffnungen nicht noch jedesmal nachträglich angebracht werden müssen, sind in der Namur-Empfehlung vom Juli 1985 mit dem Titel "Anschluß von Schwenkantrieben an Rohrarmaturen" Richtlinien zur Vereinheitlichung der Schnittstellen: Antrieb, Armatur, Wellenkupplung, Laterne herausgegeben worden.

In der Praxis werden jedoch Signalgeräte als Großserienerzeugnisse der unterschiedlichsten Art für viele Anwendungsbereiche hergestellt, so daß deren Befestigungseinrichtungen nicht entsprechend der Namur-Empfehlung gestaltet sind. Dies führt daher nach wie vor zu vielen unterschiedlichen Befestigungen, die einen hohen zusätzlichen Montageaufwand erfordern.

Der Erfindung liegt die Aufgabe zugrunde, eine Vorrichtung der eingangs genannten Art zur Befestigung von Signalgeräten auf Stellantrieben zu schaffen, mit der es möglich ist, unabhängig von den Abmessungen und der Gestaltung der Befestigungssysteme an den Signalgeräten diese an den Schwenkantrieben zu montieren und gleichzeitig an jeder gewünschten Stelle zu positionieren.

Die Lösung dieser Aufgabe ist dadurch gekennzeichnet, daß die Montageeinheit als Klemmbefestigungseinrichtung mit einem am Schwenkantrieb befestigten Basisteil und einem das Signalgerät tragenden Verschiebeteil derart ausgebildet ist, daß das Signalgerät auf den Koordinaten "x" und "y" eines räumlichen Koordinatensystems, die von Verschiebebahnen am Basisteil und am Verschiebeteil gebildet sind, gegenüber der Koordinate "z", die mit der Drehachse des Schwenkantriebes zusammenfällt, in jeweils unterschiedlichen Stellungen am Basisteil festklemmbar ist.

Eine nach dieser technischen Lehre ausgebildete Vorrichtung zur Montage von Signalgeräten an Schwenkantrieben hat den **Vorteil**, daß Steuer- und Signalgeräte unterschiedlichster Art und mit unterschiedlicher Befestigung auf dem Schwenkantrieb montiert werden können. Durch den langen Befestigungsschlitz im Verschiebeteil werden Signalgeräte unabhängig von Abstand und Größe ihrer Befestigungsschrauben schnell und lediglich unter Zuhilfenahme von Standardwerkzeugen auf dem Verschiebeteil und somit auf dem Schwenkantrieb angebracht.

Das gabelförmig ausgebildete Verschiebeteil mit seinen am Gabelende befindlichen Klemmbakken ermöglicht ein schnelles und problemloses Festklemmen des Verschiebeteils auf dem Klemmsteg des Basisteiles. Die Schraubenbefestigungsbolzen der Signalgeräte erfüllen hierbei zwei Funktionen gleichzeitig. Einerseits befestigen sie die Signalgeräte auf der Montageeinheit und andererseits klemmen sie gleichzeitig das gabelförmige Verschiebeteil derart zusammen, daß ein sicherer und fester Sitz auf dem Basisteil gewährleistet ist.

Die Klemmbefestigung ist schwalbenschwanzförmig ausgebildet, was den Vorteil hat, daß beim Lösen der Klemmverbindung das Verschiebeteil nicht herunterfällt, sondern weiterhin an dem Basisteil gehalten wird. Dies ermöglicht ein stufenloses Verschieben des Verschiebeteils entlang des Klemmsteges. Der im Verschiebeteil angeordnete Befestigungsschlitz ist länger als der Abstand der Befestigungsschrauben voneinander, damit jedes daran zu befestigende Signalgerät bei gelösten Befestigungsschrauben entlang des Befestigungsschlitzes gegenüber der Drehachse des Schwenkantriebes seitlich verschoben und justiert werden kann.

Der Vorteil dieser Anordnung ist, daß der Steuererregler oder das Signalgerät hierdurch je nach Größe und Position seines Schalters in "X"- und "Y"-Richtung derart verschiebbar ist, daß er in jeder gewünschten Stellung positioniert werden kann. Somit ist ein zuverlässiges Betätigen des Signalgerätes durch die auf der Drehachse des Schwenkantriebes befestigten Schaltnocken oder Schaltarme gewährleistet.

Für schwere, große oder besonders geformte Steuerregler oder Signalgeräte werden Verschiebeteile mit zwei oder mehr Befestigungsschlitzen verwendet, damit eine ausreichende Abstützung der Signalgeräte auf der Montageeinheit sichergestellt ist. Sollte es erwünscht sein, die Signalgeräte häufig zu verschieben oder gar auszuwechseln, kommt ein rahmenartiges Verschiebeteil mit quaderförmigen Einsätzen zur Anwendung. Hierbei kann das Signalgerät oder der Steuerregler aufgrund der quaderförmigen Einsätze verschoben oder ausgewechselt werden, ohne das Verschiebeteil demontieren zu müssen.

Zur Aufnahme der Schraubenmutter der Befestigungsschrauben und zu deren Fixierung ist an der Unterseite des Verschiebeventils koaxial zum Befestigungsschlitz eine Führungsnut angeordnet.

Da in dieser Vorrichtung jedes Bauteil mehrere Funktionen erfüllt, besteht sie aus relativ wenigen Einzelteilen, und weil zu ihrer Montage Standardwerkzeuge eingesetzt werden können, ist ein einfaches und schnelles Montieren und Positionieren der Signalgeräte vor Ort möglich.

Bevorzugte Ausführungsbeispiele der Erfindung sind in der Zeichnung schematisch dargestellt. Es zeigen

Fig. 1 in perspektivischer Ansicht einen Schwenkantrieb mit einer Vorrichtung zur Montage von Signalgeräten,

Fig. 2 eine Draufsicht auf den Schwenkantrieb von Fig. 1 mit zwei daran parallel nebeneinander montierten Signalgeräten zur Betätigung durch Schaltnocken oder Schaltarme, die von der Drehachse des Schwenkantriebes zur Seite ragen,

Fig. 3 eine Stirnansicht eines Basisteils zur Klemmbefestigung von Signalgeräten,

Fig. 4 eine Seitenansicht dieses Basisteils und

Fig. 5 eine Draufsicht auf das Basisteil,

Fig. 6 eine Frontansicht eines Verschiebeteils für die Befestigung von Signalgeräten an dem Basisteil von Fig. 3 bis 5,

Fig. 7 eine Stirnansicht des Verschiebeteils in Richtung des Pfeiles VII/IX von Fig. 6,

Fig. 8 eine Draufsicht auf das Verschiebeteil von Fig. 6 und 7,

Fig. 9 eine Stirnansicht eines gegenüber Fig. 6 bis 8 abgewandelten Verschiebeteils in Richtung des Pfeiles VII/IX von Fig. 6,

Fig. 10 eine Draufsicht auf das Verschiebeteil von Fig. 9,

Fig. 11 eine weitere abgewandelte Ausführungsform eines Verschiebeteils im Schnitt gemäß Schnittlinie XI - XI von Fig. 12,

Fig. 12 eine Stirnansicht des Verschiebeteils von Fig. 11 in Richtung des Pfeiles XII,

Fig. 13 eine Draufsicht auf dieses Verschiebeteil und

Fig. 14 eine perspektivische Ansicht eines solchen Verschiebeteils mit quaderförmigen Einsätzen zur Montage von Signalgeräten und dergleichen.

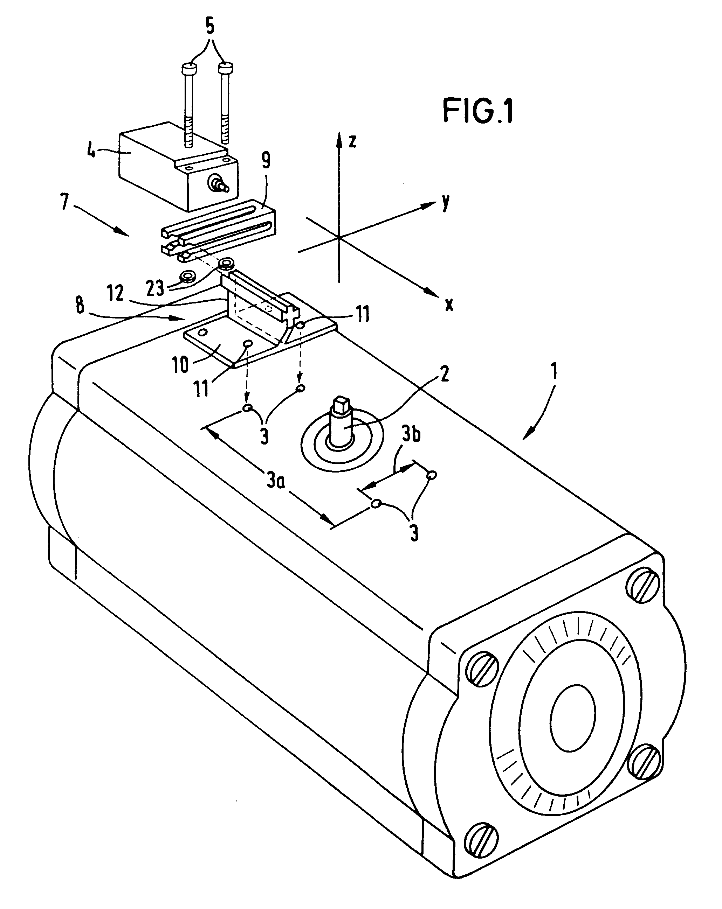

In Fig. 1 ist ein Schwenkantrieb 1 zum Betätigen von Rohrarmaturen und dergleichen gezeigt mit einer das Gehäuse des Schwenkantriebes 1 senkrecht durchsetzenden Drehachse 2, wobei an der Gehäuseoberseite des Schwenkantriebes 1 beiderseits der Drehachse 2 in einem gegenseitigen Abstand 3a von 80 mm oder 130 mm entsprechend der Namur-Empfehlung "Schnittstellen an Stellantrieben" des VDI/VDE zwei Paare von Befestigungsbohrungen 3 angeordnet sind, die jeweils einen gegenseitigen Abstand 3b von 30 mm haben.

Diese Befestigungsbohrungen 3 dienen zur Montage von Stellantrieb-Hilfseinrichtungen für die Schwenkbewegung, wie insbesondere Stellungsregler und Signalgeräte 4 in Form von Endschaltern zur Endlagenrückmeldung und dergleichen.

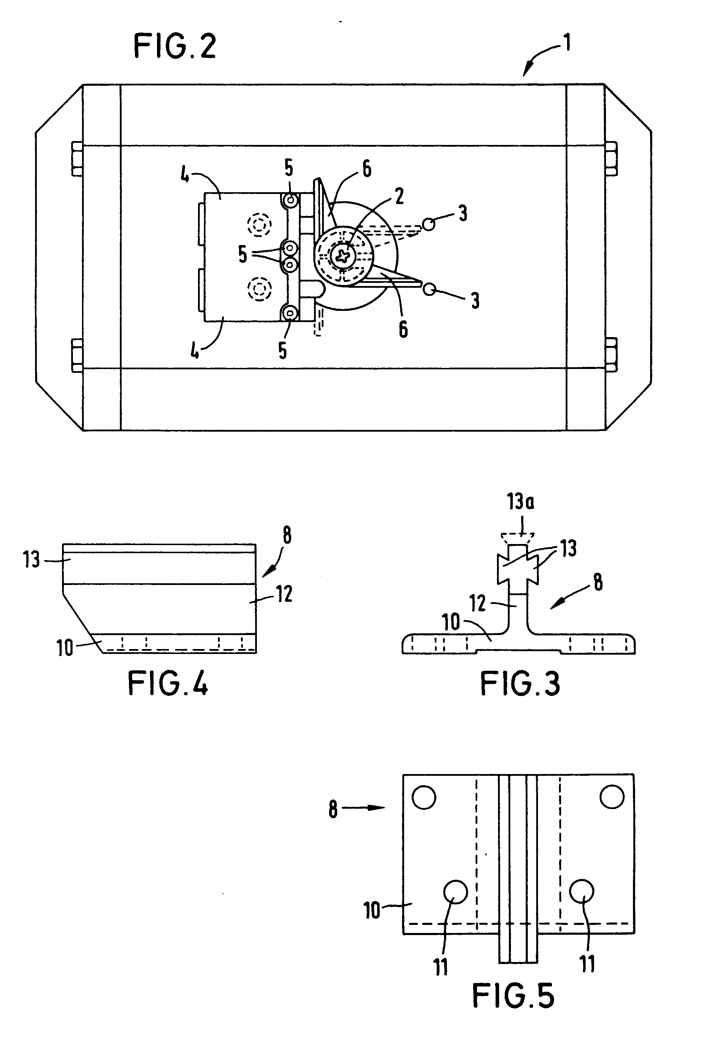

Ein solches Signalgerät 4 in Form eines Endschalters mit Schraubbefestigungsbolzen 5 ist in Fig. 1 oberhalb des Schwenkantriebes 1 gezeigt, während in der Draufsicht auf den Schwenkantrieb 1 von Fig. 2 zwei derartige Signalgeräte 4 an der Oberseite des Schwenkantriebes 1 nebeneinander montiert sind. Zur Betätigung dieser beiden Signalgeräte 4 dienen bei dem Schwenkantrieb 1 von Fig. 2 zwei an der Drehachse 2 des Schwenkantriebes 1 befestigte Schaltarme 6, die von der Drehachse 2 des Schwenkantriebes 1 zur Seite ragen und beispielsweise für einen Schwenkwinkel von 90°, 120° oder 180° zur abwechselnden Betätigung der beiden Signalgeräte 4 eingestellt werden können.

Statt solcher Schaltarme 6 können an der Drehachse 2 des Schwenkantriebes 1 auch Schaltnocken oder Kurvenscheiben montiert sein.

Zur Befestigung der Signalgeräte 4 an dem Schwenkantrieb 1 dient eine Montageeinheit 7, die als Klemmbefestigungseinrichtung ausgebildet ist und aus einem am Schwenkantrieb 1 an den beiden nebeneinanderliegenden Befestigungsbohrungen 3 befestigten Basisteil 8 und einem daran befestigten, das Signalgerät 4 tragenden Verschiebeteil 9 besteht.

Die aus dem Basisteil 8 und dem Verschiebeteil 9 bestehende Montageeinheit 7 ist so ausgebildet, daß das Signalgerät 4 auf den Koordinaten "x" und "y" eines neben dem Schwenkantrieb 1 in Fig. 1 dargestellten räumlichen Koordinatensystems, die von entsprechenden Verschiebebahnen am Basisteil 8 und am Verschiebeteil 9 gebildet sind, gegenüber der Koordinate "z", die mit der Drehachse 2 des Schwenkantriebes 1 zusammenfällt, in jeweils unterschiedlichen Stellungen am Basisteil 8 der Montageeinheit 7 festklemmbar ist.

Das Basisteil 8 der Montageeinheit 7 besteht aus einem T-Profil mit einer Grundplatte 10 mit Paaren von Befestigungsöffnungen 11 zur Befestigung an den Befestigungsbohrungen 3 des Schwenkantriebes 1 und hat einen von der Grundplatte 10 vorzugsweise mittig aufragenden Steg 12 mit zur Seite ragenden Klemmstegen 13, die nach der Montage des Basisteils 8 am Schwenkantrieb 1 senkrecht zur Drehachse 2 des Schwenkantriebes 1 ausgerichtet sind und parallel zur Grundplatte 10 des Basisteils 8 verlaufen.

Das Verschiebeteil 9, an dem das Signalgerät 4 mittels Schraubbefestigungsbolzen 5 befestigt wird, ist gabelförmig ausgebildet mit beiderseits eines horizontalen Klemmschlitzes 14 verlaufenden federnden Gabelschenkeln 15, die endseitig als Klemmbacken 16 zur Befestigung an einem der beiden Klemmstege 13 des Basisteils 8 ausgebildet sind und am Klemmsteg 13 zangenartig angreifen.

Die Gabelschenkel 15 des Verschiebeteils 9 werden von den Schraubbefestigungsbolzen 5 des Signalgerätes 4 durchsetzt und in Anlage am Klemmsteg 13 des Basisteils 8 zusammengehalten.

Zur sicheren Befestigung des Verschiebeteils 9 am Basisteil 8 haben der oder die Klemmstege 13 am Basisteil 8 ein Schwalbenschwanzprofil, und die Klemmbacken 16 am Verschiebeteil 9 sind als Schwalbenschwanznuten ausgebildet.

Zur parallelen Montage zweier Signalgeräte 4 nebeneinander entsprechend Fig. 2 weist das Basisteil 8 zwei an gegen-überliegenden Seiten des Steges 12 spiegelbildlich und parallel zueinander zur Seite ragende Klemmstege 13 auf, wobei zur zusätzlichen senkrechten Montage eines solchen Verschiebeteils 9 am oberen freien Ende des Steges 12 des Basisteils 8 ein weiterer in Längsrichtung parallel zur Grundplatte 10 verlaufender schwalbenschwanzförmiger Klemmsteg 13a vorgesehen sein kann, dessen Mittelebene in Längsrichtung des Steges 12 verläuft, wie dies in Fig. 3 gestrichelt angedeutet ist.

Das Verschiebeteil 9 weist in seiner in Fig. 1, 6, 7 und 8 gezeigten einfachsten Ausführungsform für die Befestigung eines Signalgerätes 4 in jedem seiner beiden Gabelschenkel 15 jeweils nur einen Befestigungsschlitz 17 auf, dessen Länge größer ist als der größte Abstand der beiden parallelen Schraubbefestigungsbolzen 5 eines daran zu befestigenden Signalgerätes 4, wobei der Befestigungsschlitz 17 im anderen Gabelschenkel 15 des Verschiebeteils 9 dazu dekkungsgleich angeordnet ist.

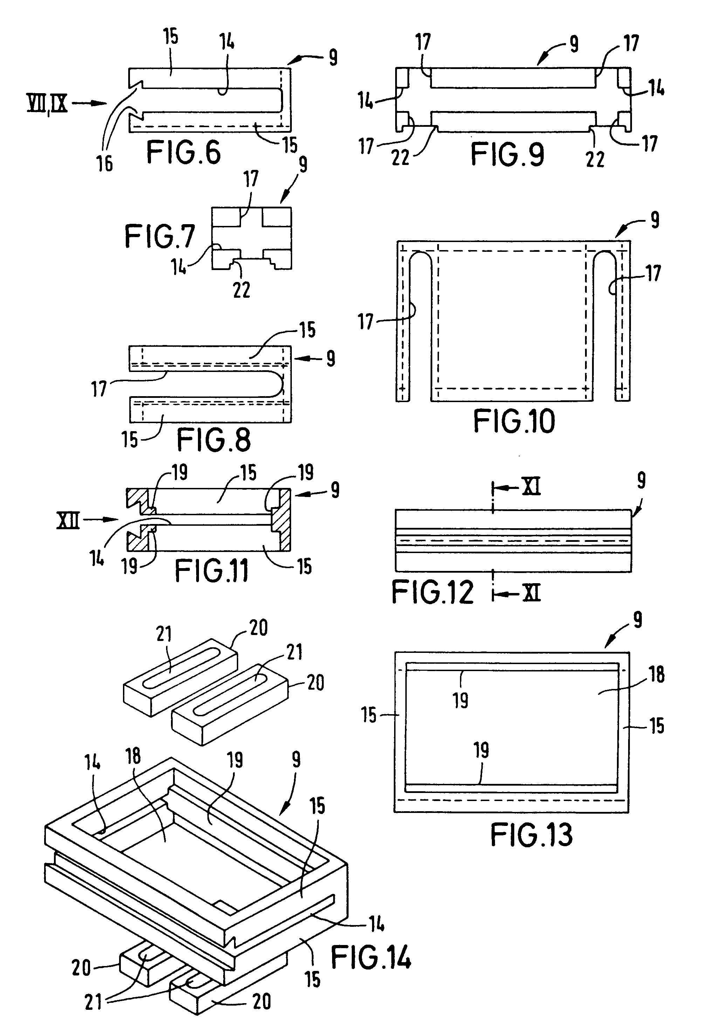

Das Verschiebeteil 9 kann aber auch, wie in Fig. 9 und 10 gezeigt ist, plattenförmig ausgebildet sein mit beiderseits eines Klemmschlitzes 14 angeordneten Gabelschenkeln 15 und mit einem im wesentlichen rechteckigen Grundriß. Bei dieser Ausführungsform weist das Verschiebeteil 9 in jedem seiner beiden Gabelschenkel 15 jeweils zwei im Abstand parallel zueinander angeordnete Befestigungsschlitze 17 auf, denen jeweils parallele Befestigungsschlitze 17 im anderen Gabelschenkel 15 deckungsgleich zugeordnet sind.

In einer weiter abgewandelten Ausführungsform kann das Verschiebeteil 9 aber auch, wie in Fig. 11 bis 14 gezeigt ist, als Rechteckrahmen ausgebildet sein mit beiderseits eines Klemmschlitzes 14 angeordneten Gabelschenkeln 15 und mit einer im wesentlichen rechteckigen Mittelöffnung 18. Dabei ragen von der Klemmseite und der gegenüberliegenden Seite des Rechteckrahmens zueinander parallele Auflagestege 19 derart nach innen, daß von beiden Seiten der Mittelöffnung 18 des Verschiebeteils 9 quaderförmige Einsätze 20 mit Längsöffnungen 21 für die Aufnahme der von einem Signalgerät 4 hervorstehenden Befestigungsschrauben oder dergleichen in den Rechteckrahmen derart paßgenau eingesetzt werden können, daß sie die Gabelschenkel 15 des Rechteckrahmens beim Festspannen der Schraubbefestigungsbolzen 5 des Signalgerätes 4 gegen den Klemmsteg 13 am Basisteil 8 beidseitig andrücken und so für eine sichere und dauerhafte Befestigung des Verschiebeteils 9 am Basisteil 8 der Montageeinheit 7 gewährleisten.

Auf der Unterseite des Verschiebeteils 7 ist koaxial zum Befestigungsschlitz 17 eine Führungsnut 22 zur Aufnahme und Führung der Schraubenmutter 23 angeordnet.

Liste der Bezugszeichen

| 1 | Schwenkantrieb |
| 2 | Drehachse |
| 3 | Befestigungsbohrung |
| 3a | Abstand |
| 3b | Abstand |
| 4 | Signalgerät |
| 5 | Schraubbefestigungsbolzen |
| 6 | Schaltarm |

| | |
|---|---|
| 7 | Montageeinheit |
| 8 | Basisteil |
| 9 | Verschiebeteil |
| 10 | Grundplatte |
| 11 | Befestigungsöffnung |
| 12 | Steg |
| 13 | Klemmsteg |
| 13a | Klemmsteg |
| 14 | Klemmschlitz |
| 15 | Gabelschenkel |
| 16 | Klemmbacken |
| 17 | Befestigungsschlitz |
| 18 | Mittelöffnung |
| 19 | Auflagesteg |
| 20 | Einsätze |
| 21 | Längsöffnung |
| 22 | Führungsnut |
| 23 | Schraubenmutter |

**Patentansprüche**

1. Vorrichtung zur Montage von Signalgeräten an Schwenkantrieben, die insbesondere zum Betätigen von Rohrarmaturen und dergleichen bestimmt sind und eine den Schwenkantrieb durchsetzende Drehachse aufweisen, wobei das Signalgerät an dem Schwenkantrieb mittels einer Montageeinheit und Schraubverbindungen oder dergleichen derart befestigt ist, daß es von Betätigungsgliedern, wie Schaltarmen, Schaltnocken oder Kurvenscheiben, die von der Drehachse des Schwenkantriebes zur Seite ragen, betätigt werden kann, **dadurch gekennzeichnet,** daß die Montageeinheit (7) als Klemmbefestigungseinrichtung mit einem am Schwenkantrieb (1) befestigten Basisteil (8) und einem das Signalgerät (4) tragenden Verschiebeteil (9) derart ausgebildet ist, daß das Signalgerät (4) auf den Koordinaten "x" und "y" eines räumlichen Koordinatensystems, die von Verschiebebahnen am Basisteil (8) und am Verschiebeteil (9) gebildet sind, gegenüber der Koordinate "z", die mit der Drehachse (2) des Schwenkantriebes (1) zusammenfällt, in jeweils unterschiedlichen Stellungen am Basisteil (8) festklemmbar ist.

2. Vorrichtung nach Anspruch 1, **dadurch gekennzeichnet,** daß das Basisteil (8) als T-Profil mit einer Grundplatte (10) zur Befestigung am Schwenkantrieb (1) und einem davon vorzugsweise mittig aufragenden Steg (12) sowie von dem Steg (12) zur Seite ragenden Klemmstegen (13), die senkrecht zur Drehachse (2) des Schwenkantriebes (1) ausgerichtet sind und parallel zur Grundplatte (10) verlaufen, ausgebildet ist.

3. Vorrichtung nach Anspruch 1 und 2, **dadurch gekennzeichnet,** daß das Verschiebeteil (9) für die Befestigung des Signalgerätes (4) am Basisteil (8) Klemmbacken (16) aufweist, die an einem Klemmsteg (13) des Basisteils (8) zangenartig angreifen.

4. Vorrichtung nach Anspruch 3, **dadurch gekennzeichnet,** daß das Verschiebeteil (9) gabelförmig ausgebildet ist mit beiderseits eines Klemmschlitzes (14) verlaufenden federnden Gabelschenkeln (15), die endseitig als Klemmbacken (16) zur Befestigung am Klemmsteg (13) des Basisteils (8) ausgebildet sind.

5. Vorrichtung nach Anspruch 4, **dadurch gekennzeichnet,** daß die Gabelschenkel (15) des Verschiebeteils (9) von den Schraubbefestigungsbolzen (5) des Signalgerätes (4) durchsetzt und in Anlage am Klemmsteg (13) des Basisteils (8) zusammengehalten sind.

6. Vorrichtung nach einem der Ansprüche 1 bis 5, **dadurch gekennzeichnet,** daß der oder die Klemmstege (13) am Basisteil (8) ein Schwalbenschwanzprofil haben, und daß die Klemmbacken (16) am Verschiebeteil (9) als Schwalbenschwanznuten ausgebildet sind.

7. Vorrichtung nach einem der Ansprüche 1 bis 6, **dadurch gekennzeichnet,** daß das Basisteil (8) zwei an gegenüberliegenden Seiten des Steges (12) spiegelbildlich und parallel zueinander zur Seite ragende Klemmstege (13) aufweist.

8. Vorrichtung nach einem der Ansprüche 1 bis 6, **dadurch gekennzeichnet,** daß das Basisteil (8) am freien Ende des Steges (12) einen in Längsrichtung parallel zur Grundplatte (10) verlaufenden schwalbenschwanzförmigen Klemmsteg (13a) aufweist, dessen Mittelebene in Längsrichtung des Steges (12) verläuft.

9. Vorrichtung nach einem der Ansprüche 1 bis 8, **dadurch gekennzeichnet,** daß das Verschiebeteil (9) für die Befestigung eines Signalgerätes (4) in jedem seiner beiden Gabelschenkel (15) jeweils mindestens einen Befestigungsschlitz (17) aufweist, dessen Länge größer ist als der größte Abstand der Schraubbefestigungsbolzen (5) eines daran zu befestigenden Signalgerätes (4), und daß der Befestigungsschlitz (17) im anderen Gabelschenkel (15) dazu deckungsgleich angeordnet ist.

10. Vorrichtung nach einem der Ansprüche 1 bis 9, **dadurch gekennzeichnet,** daß das Verschiebeteil (9) plattenförmig ausgebildet ist mit beiderseits eines Klemmschlitzes (14) angeordneten Gabelschenkeln (15) und mit einem im wesentlichen rechteckigen Grundriß und für die Befestigung mindestens eines Signalgerätes (4) jeweils zwei im Abstand parallel zueinander angeordnete Befestigungsschlitze (17) aufweist, denen jeweils parallele Befestigungsschlitze (17) im anderen Gabelschenkel (15) deckungsgleich zugeordnet sind.

11. Vorrichtung nach einem der Ansprüche 1 bis 8, **dadurch gekennzeichnet,** daß das Verschiebeteil (9) als Rechteckrahmen ausgebildet ist mit beiderseits eines Klemmschlitzes (14) angeordneten Gabelschenkeln (15) und mit einer im wesentlichen rechteckigen Mittelöffnung (18), und daß von der Klemmseite und der gegenüberliegenden Seite des Rechteckrahmens zueinander parallele Auflagestege (19) derart nach innen ragen, daß von beiden Seiten der Mittelöffnung (18) quaderförmige Einsätze (20) mit länglichen Befestigungsöffnungen (21) für die von einem Signalgerät (4) hervorstehenden Schraubbefestigungsbolzen (5) oder dergleichen in den Rechteckrahmen einsetzbar sind und die Gabelschenkel (15) des Rechteckrahmens beim Festspannen der Schraubbefestigungsbolzen (5) gegen den Klemmsteg (13) am Steg (12) des Basisteils (8) beidseitig andrücken.

# FIG.1

FIG.2

13a

FIG.4

FIG.3

FIG.5

FIG.6

FIG.7

FIG.8

FIG.9

FIG.10

FIG.11

FIG.12

FIG.13

FIG.14

**Europäisches Patentamt**

# EUROPÄISCHER RECHERCHENBERICHT

Nummer der Anmeldung

## EP 91 11 4700

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 140 459 (PEPPERL & FUCHS GMBH & CO. KG)<br>* Seite 6, Zeile 1 - Seite 8, Zeile 9; Abbildungen 1-3 * *<br>— — — | 1,9 | H 01 H 9/02<br>F 16 B 1/00<br>B 23 Q 1/28<br>F 16 K 37/00 |
| A | DE-U-8 705 609 (STRIEBEL & JOHN KG)<br>* Seite 4, Zeile 1 - Zeile 6; Anspruch 1; Abbildungen 1-7 * *<br>— — — | 1 | |
| A | US-A-2 255 706 (HEIGHT)<br>* Seite 1, linke Spalte, Zeile 12 - Zeile 15 * * * Seite 1, linke Spalte, Zeile 49 - rechte Spalte, Zeile 18; Abbildungen 1-6 *<br>*<br><br>— — — | 1-3 | |
| A | US-A-3 189 700 (EIDSON)<br>* Spalte 3, Zeile 32 - Spalte 4, Zeile 23; Abbildungen 1-8 * *<br>— — — — — | 1 | |

| RECHERCHIERTE SACHGEBIETE (Int. Cl.5) |
|---|
| H 01 H<br>F 16 B<br>B 23 Q<br>H 01 K<br>F 16 K |

Der vorliegende Recherchenbericht wurde für alle Patentansprüche erstellt

| Recherchenort | Abschlußdatum der Recherche | Prüfer |
|---|---|---|
| Den Haag | 03 Dezember 91 | CALAMIDA G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------
& : Mitglied der gleichen Patentfamilie, übereinstimmendes Dokument